(19) Europäisches Patentamt
European Patent Office
Office européen des brevets

(11) **EP 3 098 962 A1**

(12) **EUROPEAN PATENT APPLICATION**
published in accordance with Art. 153(4) EPC

(43) Date of publication:
**30.11.2016 Bulletin 2016/48**

(21) Application number: **14879123.9**

(22) Date of filing: **20.01.2014**

(51) Int Cl.:
**H02P 29/00** (2016.01)  **H02P 27/06** (2006.01)

(86) International application number:
**PCT/JP2014/050884**

(87) International publication number:
**WO 2015/107685 (23.07.2015 Gazette 2015/29)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Hitachi Industrial Equipment Systems Co., Ltd.**
**Tokyo 101-0022 (JP)**

(72) Inventors:
• **IBORI, Satoshi**
  **Tokyo 101-0022 (JP)**
• **HOTTA, Kazushige**
  **Tokyo 101-0022 (JP)**

• **ARAO, Yusuke**
  **Tokyo 101-0022 (JP)**
• **BABA, Shigeyuki**
  **Tokyo 101-0022 (JP)**
• **TANAKA, Makoto**
  **Tokyo 101-0022 (JP)**
• **NAKAMURA, Atsuhiko**
  **Tokyo 101-0022 (JP)**

(74) Representative: **Moore, Graeme Patrick et al**
**Mewburn Ellis LLP**
**City Tower**
**40 Basinghall Street**
**London EC2V 5DE (GB)**

(54) **POWER CONVERSION DEVICE**

(57) A power conversion device that performs variable-speed control of a permanent magnet synchronous electric motor and that is equipped with: a converter; a DC intermediate circuit having a smoothing capacitor; an inverter, which is equipped with upper-arm side semiconductor elements connected to the (+) potential side of the DC intermediate circuit and lower-arm side semiconductor elements connected to the (-) potential side of the DC intermediate circuit, and which converts the DC voltage smoothed by the DC intermediate circuit into AC voltage; and a current detector that detects the current flowing in the inverter. This power conversion device is equipped with a control circuit which, after the output of power from the power conversion device to the permanent magnet synchronous electric motor is stopped, performs a control to turn on one or more of the semiconductor elements on one side, that is, the upper-arm side or the lower-arm side, and turn off all of the semiconductor elements on the other side, that is, the lower-arm side or the upper-arm side, and when a prescribed current is detected by the current detector, the control circuit outputs a signal indicating that the permanent magnet synchronous electric motor is rotating.

FIG. 6

**Description**

TECHNICAL FIELD

The present invention relates to a power conversion device which drives a permanent magnet synchronous electric motor.

BACKGROUND ART

Paragraph [0008] of Patent Literature 1 describes "a synchronous motor controlling apparatus including a DC power supply, an inverter device, and a filter capacitor connected between the DC power supply and the inverter devices, in which at least one or more synchronous motors are driven by the inverter device, and when the induced voltage of the synchronous motor becomes equal to or more than a first reference value at the time of coasting, the DC power supply is operated so that the voltage on the DC side of the inverter device becomes equal to or more than a second reference value set on the basis of the induced voltage".

CITATION LIST

PATENT LITERATURE

PATENT LITERATURE 1: JP-A-2010-154661

SUMMARY OF INVENTION

TECHNICAL PROBLEM

In the permanent magnet synchronous electric motor, magnetic flux $\Phi$ is generated by a magnet. Therefore, even in the case where electric power is not supplied to the synchronous motor, when the synchronous motor inertially rotates, sinusoidal speed electromotive force proportional to the rotation speed of the synchronous motor is generated at the terminal of the synchronous motor.

However, it is described, for example, in a product operation manual, that, in the state where the output of the power conversion device is stopped for some reason, when the synchronous motor is inertially rotating, speed electromotive force is always generated at the terminal of the motor. However, in general, a user does not think that the voltage (electromotive force) is always generated at the terminal of the electric motor.

For this reason, when the wire length between the power conversion device and the permanent magnet synchronous motor is long, the user does not recognize that the synchronous motor is rotating at the installation place of the power conversion device. As a result, the user may misunderstand that there is no safety problem since the output of the power conversion device is interrupted, and thereby carelessly touch the output terminal of the power converter device.

An object of the invention is to provide a power conversion device capable of calling the attention of the user, even during operation of the power conversion device.

SOLUTION TO PROBLEM

In order to achieve the above-described object, for example, the present invention provides a power conversion device which includes: a forward converter converting an AC voltage of an AC power supply into a DC voltage by rectifying the AC voltage; a DC intermediate circuit having a smoothing capacitor smoothing the DC voltage converted in the forward converter; a reverse converter having upper-arm side semiconductor elements connected to the (+) potential side of the DC intermediate circuit, and lower-arm side semiconductor elements connected to the (-) potential side of the DC intermediate circuit, to convert the DC voltage rectified by the DC intermediate circuit into an AC voltage; and a current detector detecting a current flowing through the reverse converter, and variably controls the speed of a permanent magnet synchronous motor, the power conversion device including a control circuit configured, after the output of electric power from the power conversion device to the permanent magnet synchronous motor is interrupted, to control the upper-arm side semiconductor elements and the lower-arm side semiconductor elements to turn on one or more of semiconductor elements of one arm side of the upper-arm side or the lower-arm side, and to turn off all of the semiconductor elements of the other arm side, and configured, when a predetermined current is detected by the current detector, to output a signal indicating that the permanent magnet synchronous motor is rotating.

ADVANTAGEOUS EFFECTS OF INVENTION

With the present invention, it is possible to provide a power conversion device in which the safety is increased by calling attention of the user.

BRIEF DESCRIPTION OF DRAWINGS

[FIG. 1] FIG. 1 shows an example of a configuration diagram of a power conversion device according to an embodiment.
[FIG. 2] FIG. 2 shows an example of another configuration diagram of the power conversion device according to the embodiment.
[FIG. 3] FIG. 3 shows an example of a single line diagram of the system according to the embodiment.
[FIG. 4] FIG. 4 shows an example of a voltage detection circuit according to the embodiment.
[FIG. 5] FIG. 5 shows a simplified equivalent circuit of an induction motor and a permanent magnet synchronous motor.
[FIG. 6] FIG. 6 shows an example of a view showing a rotation state detection operation mode of the permanent magnet synchronous motor according to the embodiment, and a time chart of the rotation state detection operation mode.
[FIG. 7] FIG. 7 shows a rotation state detection operation mode of the permanent magnet synchronous motor according to the embodiment, and a time chart of the rotation state detection operation mode.
[FIG. 8] FIG. 8 shows a rotation state detection operation mode of the permanent magnet synchronous motor according to the embodiment.
[FIG. 9] FIG. 9 shows another example of the rotation state detection operation mode of the permanent magnet synchronous motor according to the embodiment.
[FIG. 10] FIG. 10 shows another example of the rotation state detection operation mode of the permanent magnet synchronous motor according to the embodiment.
[FIG. 11] FIG. 11 shows another example of the rotation state detection time chart of the permanent magnet synchronous motor according to the embodiment.
[FIG. 12] FIG. 12 shows a display example of a digital operation panel according to the embodiment.

DESCRIPTION OF EMBODIMENTS

EMBODIMENT 1

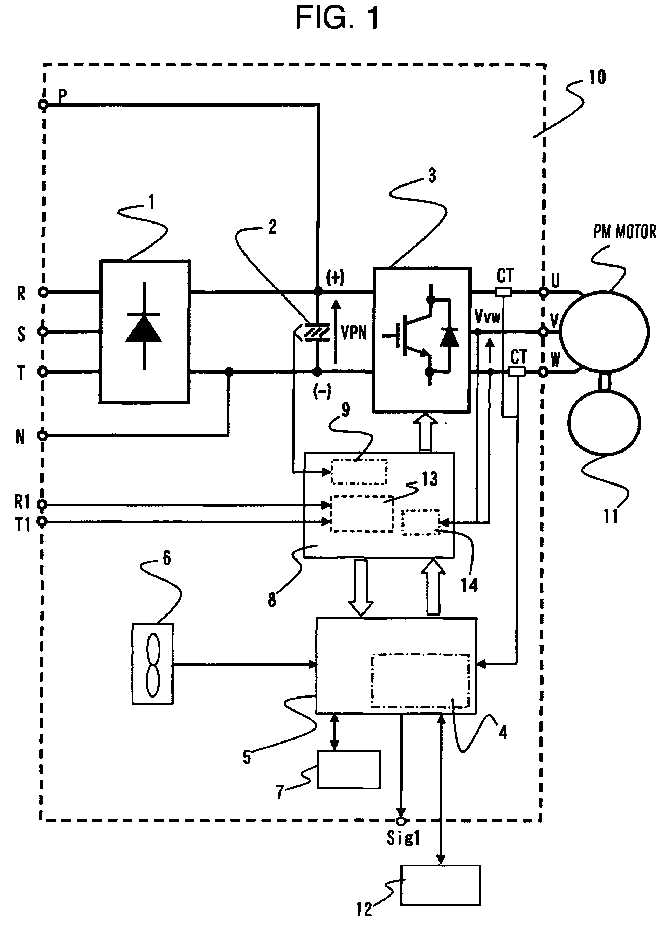

In the following, present embodiment 1 will be described with reference to the accompanying drawings. It should be noted that the common configurations in each of the drawings are denoted by the same reference numbers and characters. Further, present embodiment 1 is not limited to the illustrated example. In the following, the form of a power conversion device in embodiment 1 will be described with reference to the accompanying drawings. FIG. 1 shows an example of a configuration diagram of the power conversion device according to embodiment 1.
A power conversion device 10 of FIG. 1 is configured by including a forward converter 1 for supplying electric power to a PM motor (hereinafter referred to as a permanent magnet synchronous motor) directly coupled to a load device 11, a smoothing capacitor 2, a reverse converter 3, a control calculation device 4, a control circuit 5, a cooling fan 6, a digital operation panel 7, a drive circuit 8, a DC voltage detection circuit 9, a switching regulator circuit 13, and a voltage detection circuit 14. FIG. 1 shows a case where an AC power supply is used as an arbitrary input power supply. The forward converter 1 converts AC power into DC power. The smoothing capacitor 2 is provided in a DC intermediate circuit.
The reverse converter 3 converts DC power into AC power having an arbitrary frequency. The reverse converter 3 is configured by semiconductor elements, each of which is formed of a switching element and a diode connected in parallel with the switching element. In the reverse converter 3, for example, IGBTs as typical switching elements are mounted. Here, the switching element is not limited to IGBTs, and any element, as long as it has a form as a switching element, may be used. For example, SiC (silicon carbide), which is a wide band gap semiconductor element having performance exceeding the physical property value limit of silicon (Si), GaN (gallium nitride), or the like, may also be used.
The cooling fan 6 cools a power module provided in each of the forward converter 1 and the reverse converter 3. The digital operation panel 7 performs setting, changing, display of failure state and monitor, of various control data of the power conversion device. In the operation panel 7, a display section capable of displaying a failure is provided, so that, when a failure in the power conversion device is detected, the failure is displayed on the display section. The operation panel 7 of the present embodiment is not limited to a particular type, but, in view of the user's operability of the device as the digital control panel, is configured so that the user can perform operation while viewing a display of the display section of the operation panel 7.

It should be noted that the display section is not necessarily configured to be integrated with the operation panel 7. However, it is desired that the display section is configured to be integrated with the operation panel 7 so that the user operating the operation panel 7 can perform the operation while viewing the display on the display section. Various control data of the power conversion device, which are inputted from the operation panel 7, are stored in a storage section (not shown).

The control circuit 5 controls switching elements of the reverse converter 3 and also performs overall control of the power conversion device 10 on the basis of various control data inputted by the digital operation panel 7. The control circuit 5 has the control calculation devices 4 (for example, a microcomputer, or the like) mounted therein, and is configured to be able to perform required control processing according to various control data inputted from the digital operation panel 7. Further, the control circuit 5 is configured to be able to perform required control processing according to various control data inputted from a host device 12 (for example, a communication device, a wireless device, or a command device).

A Sig1 is an alarm output signal to inform whether the permanent magnet synchronous motor is rotating or stopped. Of course, this alarm signal may be transmitted to the host device 12.

Although the internal configuration is omitted, the control calculation device 4 (for example, a microcomputer, or the like) performs calculation on the basis of information of stored data in the storage section in which various control data are stored.

Current detectors CT respectively detect line currents of U phase and W phase of the permanent magnet synchronous motor. The line current of V phase is obtained as iv = - (iu + iw) from the AC condition (iu + iv + iw = 0). FIG. 1 shows an example in which two CTs are used, but line currents of U phases, V phase, and W phase may be respectively detected by using three CTs.

The drive circuit 8 drives the switching elements of the reverse converter 3 on the basis of a command from the control circuit 5. In the drive circuit 8, the switching regulator circuit (DC/ DC converter) 13 is mounted, and generates each DC voltage required for operation of the power conversion device to respectively supply the DC voltages to the configurations.

Reference numeral 14 denotes a circuit which detects a voltage of the output terminal of the power conversion device. When the output of the power conversion device is interrupted, the speed electromotive force of the permanent magnet synchronous motor is detected.

A R1 terminal and a T1 terminal are power supply terminals of the switching regulator circuit 13. The DC voltage detection circuit 9 detects the voltage of the smoothing capacitor 2 which configures the DC intermediate circuit. Further, when, as an arbitrary input power supply, a DC power supply is supplied instead of an AC power supply, the + side of the DC power supply is connected to the (+) potential side of the DC intermediate circuit, and the - side of the DC power supply is connected to the (-) potential side of the DC intermediate circuit. Further, AC terminals R, S, T may be connected to each other so that this connection point is connected to the + side of the DC power supply, and the - side of the DC power supply may be connected to the (-) electric potential side of the DC intermediate circuit. On the contrary, the + side of the DC power supply may be connected to the (+) electric potential side of the DC intermediate circuit, and the AC terminals R, S, T may be connected to each other so that this connection point is connected to the - side of the DC power source.

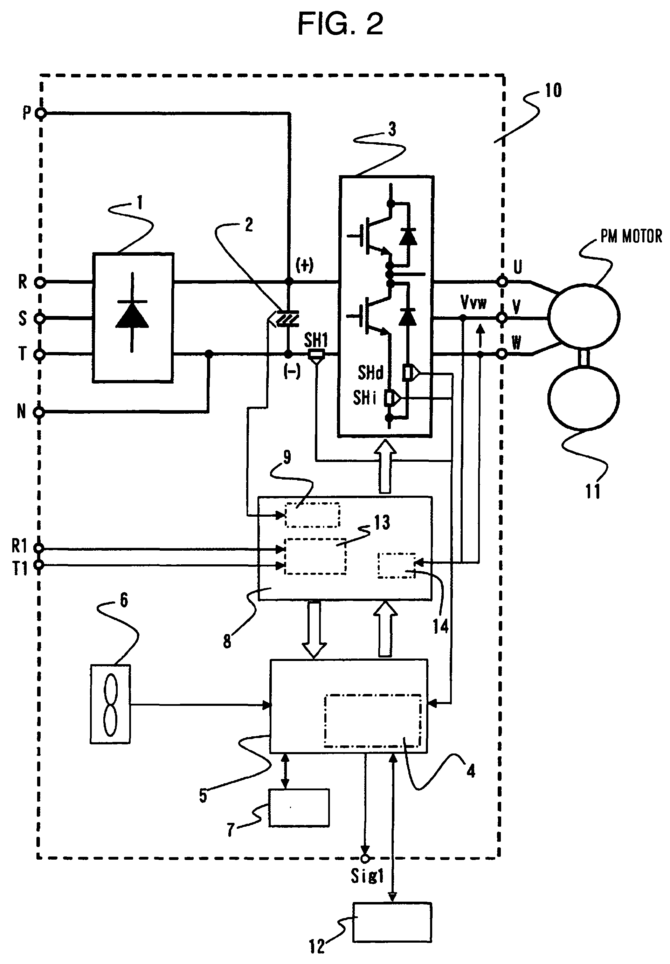

FIG. 2 shows an example of another configuration diagram of the power conversion device according to the embodiment. The configurations and functions, which are common to those in FIG. 1, are denoted by the same reference numbers and characters. The difference between FIG. 1 and FIG. 2 is the detection position of the current detector.

A SH1, a SHi, and a SHd are shunt resistance current detectors for current detection and are arranged such that the SH1 detects a current on the (-) side of the DC intermediate circuit, such that the SHi is connected to each of IGBTs of U phase, V phase, and W phase, which IGBTs are lower-arm side switching elements configuring the reverse converter 3 and connected to the (-) potential side of the DC intermediate circuit, and such that the SHd is connected to a diode connected in parallel with each of the IGBTs which are the switching elements.

That is, the shunt resistance current detector SHi provided on the DC bus side of the power conversion device is a current detector which detects the current flowing through each of the IGBTs, and the shunt resistance current detector SHd is a current detector which detects the current flowing through the diode connected in parallel with each of the IGBTs.

The current flowing through the permanent magnet synchronous motor can be detected by the shunt resistance current detector provided on the DC bus side of the power conversion device. Further, the shunt resistance current detectors SHi and SHd are connected to the lower-arm side semiconductor element which is made of the IGBT and the diode and which configures the reverse converter 3 and is connected to the (-) potential side of the DC intermediate circuit. However, the shunt resistance current detectors SHi and SHd may also detect the current by being connected to the upper-arm side semiconductor element which is made of the IGBT and the diode and which configures the reverse converter 3 and is connected to the (+) potential side of the DC intermediate circuit.

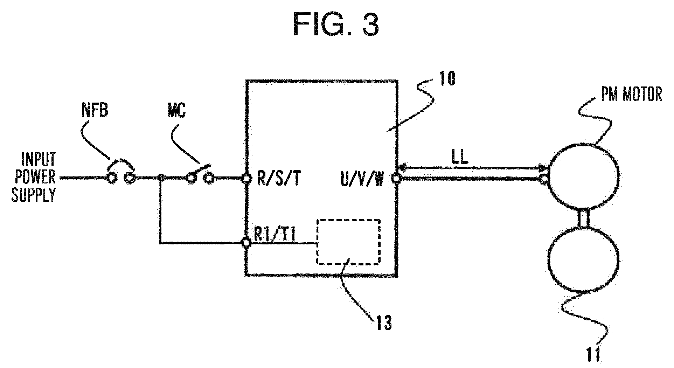

FIG. 3 shows an example of a single line diagram of the system according to the embodiment. Reference character NFB denotes a no-fuse breaker, and reference character MC denotes an electromagnetic contactor. The R1 terminal and the T1 terminal are power supply terminals of the switching regulator circuit 13. In the case where the power conversion device is broken due to some failure, and when, depending on the broken component, the failure state is released and the power conversion device is restarted, the power conversion device is again destroyed, and thereby the degree of destruction is increased. In order to prevent this, upon failure of the power conversion device, the power supply, as the main power supply, to each of the R, S, T input terminals of the power conversion device is interrupted by the electromagnetic contactor MC, and the switching regulator circuit 13 is operated from the output side of the no-fuse breaker NFB through the R1 terminal and the T1 terminal. In the case of the configuration of supplying power to the R1 terminal and the T1 terminal from the output side of the no-fuse breaker NFB, the power supplies in the power conversion device (for example, a power supply for a digital device, such as a microcomputer, a driving power supply for switching elements, an analog power supply, and the like) can be operated without the main power supply of the power conversion device. Therefore, even in the case where, when the power conversion device is stopped due to some failure, the upper-side electromagnetic contactor MC is turned off, the switching elements can be turned on and off by the power supply in the power conversion device through the control circuit including the microcomputer and the drive circuit. For this reason, for example, in the case where the speed electromotive force Es of the permanent magnet synchronous motor remains, when the gate voltage of only the lower-arm side switching element UN is turned on (VP, WP, UN, VN and WN are turned off), a current inevitably flows, and when the speed electromotive force Es does not remain, the current does not flow. That is, without the main power supply of the power conversion device, it is possible to determine that, when the current flows, the synchronous motor is rotated, and that, when the current does not flow, the synchronous motor is stopped. The operator can confirm a display of the failure, or the like, and accurately find out how to cope with the failure.

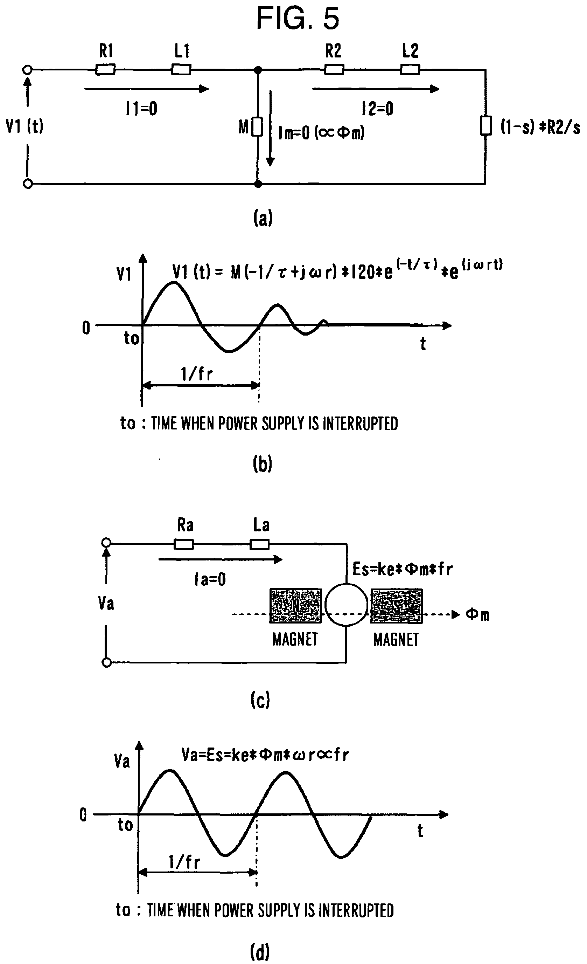

In the case where the permanent magnet synchronous motor is driven by the power conversion device 10, when the output of the power conversion device is intercepted (the output is stopped) due to some failure (for example, overcurrent, overvoltage, under-voltage, instantaneous power failure, or the like), the permanent magnet synchronous motor inertially rotates. In the permanent magnet synchronous motor, magnetic flux $\Phi$ is generated by the magnet, and hence, when the synchronous motor inertially rotates without power supply, sinusoidal speed electromotive force proportional to the rotation speed is always generated at the terminal of the synchronous motor. The speed electromotive force of the permanent magnet synchronous motor will be described with reference to FIG. 5(c) and FIG. 5(d).

However, in the state where the wire length LL between the power conversion device and the synchronous motor is long, and in the installation site of the power conversion device, which is far from the synchronous motor, the operator cannot know whether the synchronous motor is rotated or stopped.

In this case, when the rotating synchronous motor is tried to be restarted, the magnetic pole position of the synchronous motor is unknown, and thereby the magnetic pole position of the synchronous motor is different from the output phase of the power conversion device, so that the synchronous motor cannot be controlled due to the step-out phenomenon peculiar to the synchronous motor.

Further, in the state where, after the power conversion device is broken due to some factor, the output of the power conversion device is stopped, and where, after the power supply of the power conversion device is intercepted, the synchronous motor inertially rotates, the operator generally does not consider that the speed electromotive force is always generated at the terminal of the synchronous motor, and hence misunderstands that there is no safety problem since the output of the power conversion device is interrupted, or the operator misunderstands that the synchronous motor is stopped, and tries to remove the output terminals U, V, W power lines in order to replace the power conversion device. In this case, the operator may get an electric shock at the moment of touching the U, V, W output terminals due to the speed electromotive force of the synchronous motor.

In this case, when the switching regulator circuit 13 is operated through the R1 terminal and the T1 terminal, whether the synchronous motor is rotating or stopped can be displayed. Therefore, when the maintenance is performed after confirmation of the stop of the synchronous motor, it is possible to avoid carelessly getting an electric shock.

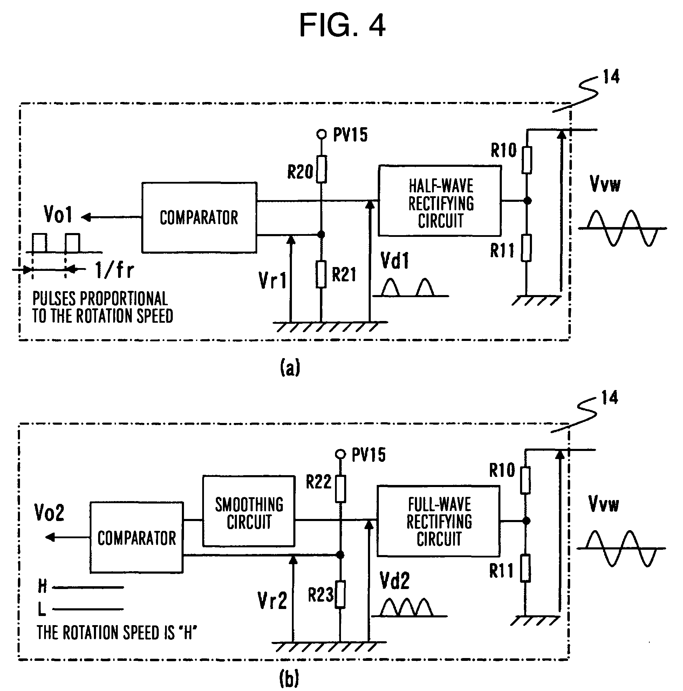

FIG. 4 shows an example of a voltage detection circuit according to the embodiment. In the case where the "inertial rotation detection mode" of the synchronous motor is selected beforehand by the digital operation panel 7, when the output of the power conversion device is interrupted, the speed electromotive force of the permanent magnet synchronous motor is detected. In the permanent magnet synchronous motor, magnetic flux $\Phi$ is generated by the magnet. Therefore, when the synchronous motor inertially rotates without power supply, sinusoidal speed electromotive force Es proportional to the rotation speed is generated at the terminals of the synchronous motor.

In FIG. 4(a), speed electromotive force Vvw (= Es) between the output terminals V and W of the power conversion device is converted into a voltage Vd1 by a half-wave rectifier circuit and is then compared with a reference voltage Vr1 by a comparator to be converted into a pulse voltage Vo1. This signal is inputted into a microcomputer (not shown), and the number of pulses is counted to determine whether or not the synchronous motor is rotating. The embodiment is characterized in that, since the number of pulses proportional to the speed electromotive force is counted, the rotation speed of the synchronous motor can be determined. That is, since the rotation speed Nr ($\propto$ 1/fr) is known, it can accurately determine whether or not the synchronous motor is rotating. A control is performed such that, when the counted number of pulses exceeds a value set beforehand, a signal indicating that the permanent magnet synchronous motor is rotating is outputted, and such that, when the counted number of pulses is not larger than the value set beforehand, a signal indicating that the permanent magnet synchronous motor is stopping is outputted. Of course, the voltage detection circuit is not limited to the use of the half-wave rectifier circuit and the comparator.

In FIG. 4(b), the speed electromotive force Vvw (= Es) between the output terminals V and W of the power conversion device is converted into a voltage Vd2 by a full-wave rectifier circuit to be waveform shaped by a smoothing circuit, and is then compared with a reference voltage Vr2 by a comparator to be converted into a pulse voltage Vo2. This signal is inputted into a microcomputer (not shown), and the presence or absence of the voltage is determined, so that whether or not the synchronous motor is rotating is determined.

Of course, Vuv or Vwu may be used as the speed electromotive force. The presence or absence of rotation of the synchronous motor may be detected by using phase voltages Vu-, Vv-, Vw- on the basis of the (-) electric potential side of the power conversion device. Further, the presence or absence of rotation of the synchronous motor may also be detected from the speed electromotive force obtained when the speed electromotive forces Vuv, Vvw, Vwu are subjected to three-phase full-wave rectification. The intent of the present embodiment is not changed in each of the cases. FIG. 4(a) and FIG. 4(b) are only examples.

As the alarm output signal Sig1, for example, when the synchronous motor is rotating, 'H' is outputted as the alarm output signal, and when the synchronous motor is stopped, 'L' is outputted as the alarm output signal. Thereby, an alarm lamp can be turned on by using the alarm output signal, to call attention of the user.

FIG. 5 shows a simplified equivalent circuit of an induction motor and the permanent magnet synchronous motor. The speed electromotive force (residual voltage) of the induction motor is described in comparison with the permanent magnet synchronous motor.

FIG. 5(a) shows an equivalent circuit of the induction motor, which circuit is configured by a primary voltage V1, a primary resistance R1, a primary leakage inductance L1, a primary current I1, a secondary resistance R2, a secondary leakage inductance L2, a secondary current I2, an excitation inductance M (magnetic flux $\Phi$m), and an excitation current Im. The speed control is performed by changing the frequency value and the voltage value of the primary voltage.

Due to the damping characteristics of the speed electromotive force (residual voltage) of the induction motor, for example, when commercial power supply is interrupted in the state where the induction motor is driven by the commercial power supply, sinusoidal speed electromotive force proportional to the rotational speed at the time of interruption of the commercial power is generated in the induction motor. Even in the case where the output of the power conversion device is interrupted, sinusoidal speed electromotive force proportional to the rotational speed at the time of interruption of the commercial power is generated in the induction motor similarly to the commercial power supply.

The damping behavior of the speed electromotive force V1 (residual voltage) is different according to the characteristics of a load connected to the induction motor. The residual voltage V1 is represented by the following expression.

$$V1(t) = M\,(-1/\tau + j\omega r) * I20 * e^{(-t/\tau)} * e^{(j\omega rt)} \qquad \text{expression (1)}$$

Here,

I20 : Second type initial value of secondary current
M : Mutual inductance between primary inductance and secondary inductance
$\tau$ : Circuit time constant (L/ R) of induction motor
$\omega$r : Rotation angle frequency of induction motor ($\omega$r = 2$\pi$ * fr)
t : Time

The damping behavior of the residual voltage of the induction motor at the time of interruption of the power supply is similar between when the induction motor is driven by the power conversion device and when the induction motor is driven by commercial power supply.

FIG. 5(b) is a view showing the behavior of the residual voltage after the power supply to the induction motor is interrupted. Time to is the time when the power supply from the power conversion device is interrupted, and the residual voltage V1 of the induction motor after to shows the behavior according to expression (1).

Here, in expression (1), under the condition that the rotor angular velocity $\omega$r is not suddenly reduced (for example, when the load of the ventilation fan is small, and the inertia moment GD$^2$ is large), expression (1) becomes expression (2). The period of the residual voltage at this time is greatly dependent on time constant $\tau$, and the residual voltage is substantially periodically attenuation.

$$V1(t) \propto Vdo * e^{(-t/\tau)} \qquad \text{expression (2)}$$

On the other hand, under the condition that the rotor angular velocity is suddenly reduced (for example, when the viscosity of the pump is large, and the inertia moment GD$^2$ is small), expression (1) becomes expression (3). In this case, the period and amplitude of the residual voltage are rapidly attenuated and changed.

$$V1(t) \propto Vd(\omega r) * e^{(j\omega rt)} \qquad \text{expression (3)}$$

That is, the residual voltage V1 of the induction motor is greatly dependent on the load condition, and has a characteristic of being attenuated according to the rotation angle frequency $\omega r$ (= $2\pi fr$) of the induction motor and the circuit time constant $\tau$ of the induction motor. Thereby, the residual voltage V1 is attenuated to about several V in a relatively short period of time. For this reason, in the case of the induction motor, even when, after the power supply to the induction motor is interrupted, the terminal of the induction motor is touched, there is no risk of getting electric shock.

FIG. 5(c) shows an equivalent circuit of the permanent magnet synchronous motor, which circuit is configured by an armature voltage (primary voltage) Va, an armature resistance Ra, an armature inductance La, an armature current Ia, a speed electromotive force Es, and a magnetic flux $\Phi m$ of a permanent magnet. The speed control is performed by changing the frequency value and the voltage value of the armature voltage.

Due to the damping characteristics of the speed electromotive force (residual voltage) of the permanent magnet synchronous motor, for example, when commercial power supply is interrupted in the state where the synchronous motor is driven by the commercial power supply, sinusoidal speed electromotive force proportional to the rotational speed at the time of interruption of the power supply is generated in the synchronous motor. Even in the case where the output of the power conversion device is interrupted, sinusoidal speed electromotive force proportional to the rotational speed at the time of interruption of the power supply is generated in the synchronous motor similarly to the case of the commercial power supply. While the synchronous motor is rotated by the speed electromotive force, unattenuated voltage proportional to the rotation speed is generated by the action of the magnetic flux generated by the permanent magnet provided in the synchronous motor.

The speed electromotive force Va of the permanent magnet synchronous motor is represented by the following expression.

$$Va = Es = ke * \Phi m * \omega r \propto fr \qquad \text{expression (4)}$$

Here,

    ke : Constant
    $\Phi m$ : Magnetic flux
    $\omega r$ : Rotator angular velocity of synchronous motor ($\omega r = 2\pi * fr$)

The behavior of the residual voltage of the permanent magnet synchronous motor after interruption of the power supply is the same between when the synchronous motor is driven by the power conversion device and when the synchronous motor is driven by commercial power supply.

FIG. 5(d) is a view showing the behavior of the speed electromotive force (residual voltage) after the power supply to the permanent magnet synchronous motor is interrupted. Time to is the time when the power supply from the power conversion device is interrupted, and the residual voltage Va of the permanent magnet synchronous motor after to shows the behavior according to expression (4). That is, the residual voltage Va has a characteristic according to the rotation angle frequency $\omega r$ (= $2\pi fr$) of the synchronous motor. While the synchronous motor is rotating, unattenuated voltage proportional to the rotation speed is generated by the action of the magnetic flux $\Phi m$ generated by the permanent magnet provided in the synchronous motor.

The speed electromotive force (residual voltage) V1 of the induction motor shows the attenuation behavior. However, the permanent magnet synchronous motor is different from the induction motor in that the speed electromotive force (residual voltage) Va of the permanent magnet synchronous motor shows unattenuated behavior proportional to the number of rotation.

For this reason, in the case of the permanent magnet synchronous motor, even where the power supply to the synchronous motor is interrupted, since then the speed electromotive force (residual voltage) is continuously generated. Therefore, when the synchronous motor terminal or the output terminal of the power conversion device is touched, there is inherently a risk of getting electric shock.

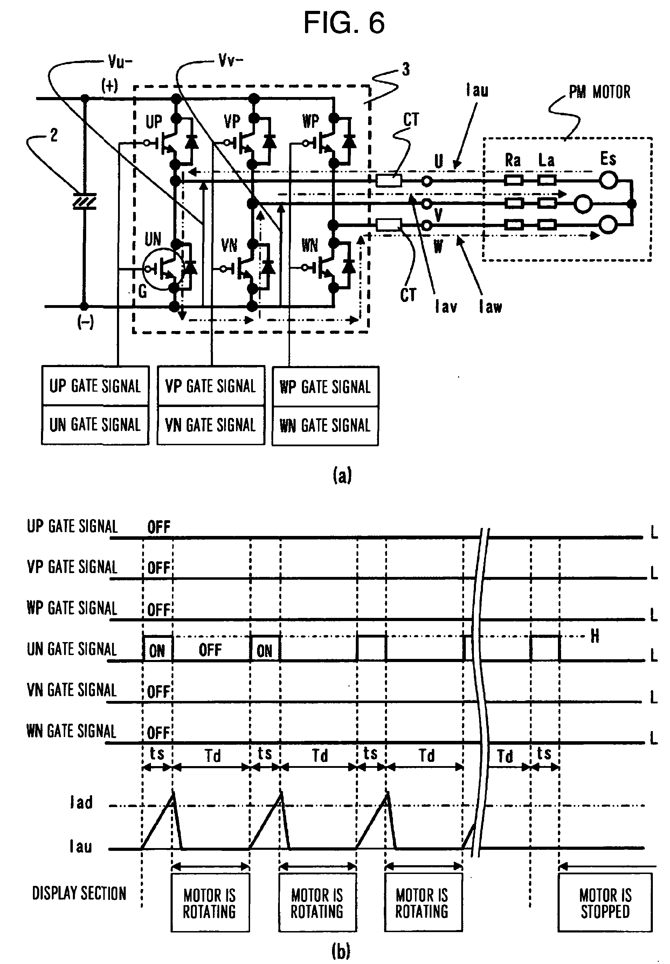

FIG. 6 shows an example of a view showing a rotation state detection operation mode of the permanent magnet synchronous motor according to the embodiment, and a time chart of the detection operation mode. As shown in FIG. 6(a), the reverse converter 3 is configured by upper-arm side UP, VP, WP switching elements connected to the (+) potential side of the DC intermediate circuit, and lower-arm side UN, VN, WN switching elements connected to the (-) potential side of the DC intermediate circuit.

In the circuit configuration of FIG. 6(a) of the embodiment, routes of currents Iau, Iav and Iaw flowing through the switching elements and the permanent magnet synchronous motor when only the lower-arm side switching element UN is turned on. In this case, the current Iau, resulting from division of the speed electromotive force Es by the impedance of the synchronous motive, flows through the U phase of the synchronous motor.

In the embodiment in which the "inertial rotation detection mode" of the synchronous motor is selected beforehand by the digital operation panel 7, when, while the permanent magnet synchronous motor is driven by the power conversion device, the power conversion device is stopped due to some failure (all the elements UP, VP, WP, UN, VN, WN configuring the reverse converter 3 are turned off), then, among the switching elements configuring the reverse converter 3, only the lower-arm side switching element UN is turned on (VP, WP, UN, VN, and WN are turned off), and the currents Iau and Iaw generated by the speed electromotive force Es of the permanent magnet synchronous motor are detected by the current detectors CT. The current Iav can be obtained as Iav = - (Iau + Iaw).

Here, examples of such failure caused in the power conversion device include instantaneous power failure of the power supply supplied to the power conversion device, the shortage of voltage, overcurrent and overvoltage for protecting the switching elements configuring the reverse converter of the power conversion device, emergency shut-off and free-run stop caused by a command from a host device, or the like. Due to such failure, the power supply to the synchronous motor is interrupted while the synchronous motor is driven.

In the state where the speed electromotive force Es of the permanent magnet synchronous motor remains, when only the lower-arm side switching element UN is turned on (VP, WP, UN, VN, and WN are turned off), the current surely flows, and when the speed electromotive force Es does not remain, the current does not flow. That is, it can be recognized that when the current flows, the synchronous motor is rotating, and that when the current does not flow, the synchronous motor is stopped.

Here, that the switching element UN is turned on means that a voltage signal of "H" level is applied to the gate G of the switching element UN so that the switching element UN is made conductive.

Further, the same effect can be obtained when only the lower-arm side switching element (for example, UN) is turned on and operated (UP, VP, WP, VN, and WN are turned off), or when only the two lower-arm side switching elements (for example, UN and VN) are turned on and operated (UP, VP, WP, and WN are turned off), or when only the three lower-arm side switching elements (for example, UN, VN and WN) are turned on and operated (UP, VP, and WP are turned off).

FIG. 6(b) shows an example of a view of a time chart. After the power conversion device is stopped by some failure (the elements UP, VP, WP UN, VN, WN configuring the reverse converter 3 are all turned off), only the lower-arm side switching element UN is turned on in the time period of ts, and a current flowing through the current detector CT is detected. When the value of the detected current exceeds a current value set beforehand, a signal is emitted to the digital operation panel 7 by the control circuit 5, so that the state where the synchronous motor is rotating is displayed on the display. Further, only the lower-arm side switching element UN is turned on (VP, WP, UN, VN, WN are all turned off) in each time period Td set beforehand, and the current is repeatedly detected by the current detector CT. Then, when the value of the detected current exceeds the current value set beforehand, the signal indicating that the synchronous motor is rotating is emitted from the control circuit 5 to the digital operation panel 7 and is displayed on the display, while, when the value of the detected current is not larger than the current value set beforehand, the signal indicating that the synchronous motor is stopped is emitted from the control circuit 5 to the digital operation panel 7 and is displayed on the display.

The present embodiment is configured such that, for example, the current is detected in each Td = 5 seconds, and on the basis of the detected current, it is determined whether the synchronous motor is rotating or stopped. That is, it can be said that it is sufficient to detect the current in each relatively long time period Td.

Here, the current value set beforehand may be a value of 0 A or more, and the current value is not limited. Further, the time period Td set beforehand may be arbitrarily set by the operator using the digital operation panel 7.

Further, when the output of the power conversion device is interrupted, on the basis of a signal from the host device 12, whether the synchronous motor is rotating or stopped is determined according to the current value which is detected in such a manner that the speed electromotive force of the permanent magnet synchronous motor is detected as described in the embodiment of FIG. 4, and that, as shown in embodiments of FIG. 6 to FIG. 10, only the lower-arm side switching element UN is turned on, so that the currents flowing through the switching elements are detected by the current detectors CT, or the currents flowing through the semiconductor elements configuring the reverse converter are detected by the shunt resistance current detectors. Thereby, whether the synchronous motor is rotating or stopped is displayed on the display.

EMBODIMENT 2

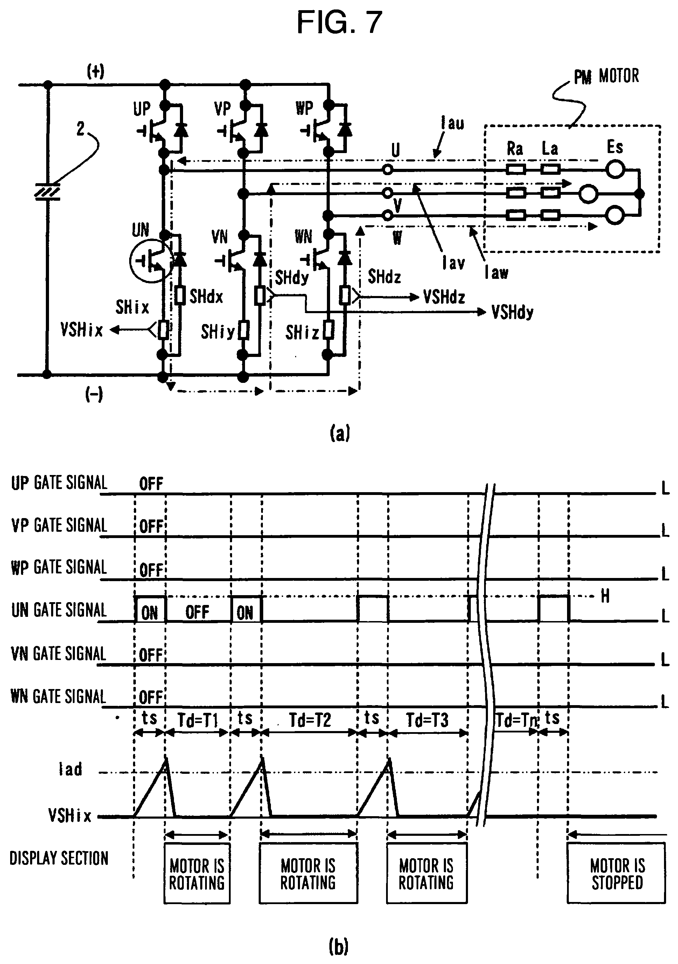

FIG. 7 shows a rotation state detection operation mode of the permanent magnet synchronous motor according to embodiment 2, and a time chart of the rotation state detection operation mode. Configurations and functions in embodiment 2, which are common to those in FIG. 6 in embodiment 1, are denoted by the same reference numerals and characters.

As shown in FIG. 7(a), the reverse converter 3 is configured by upper-arm side UP, VP, WP switching elements connected to the (+) potential side of the DC intermediate circuit, lower-arm side UN, VN, WN switching elements connected to the (-) potential side of the DC intermediate circuit, shunt resistance current detectors SHix, SHiy, SHiz detecting respectively currents of the lower-arm side UN, VN, WN switching elements, and shunt resistance current detectors SHdx, SHdy, SHdz detecting respectively currents of diode elements respectively connected in parallel with the UN, VN, WN switching elements.

The circuit configuration of FIG. 7(a) of the embodiment shows routes of current Iau, Iav and Iaw flowing through the switching elements and the permanent magnet synchronous motor, when only the lower-arm side switching element UN is turned on (VP, WP, UN, VN, WN are turned off). In this case, the current Iau, resulting from division of the speed electromotive force Es by the impedance of the synchronous motive, flows through the U phase of the synchronous motor.

In the embodiment in which the "inertial rotation detection mode" of the synchronous motor is selected beforehand by the digital operation panel 7, when, while the permanent magnet synchronous motor is driven by the power conversion device, the power conversion device is stopped due to some failure (all the elements UP, VP, WP, UN, VN, WN configuring the reverse converter 3 are turned off), then, among the elements configuring the reverse converter 3, only the lower-arm side switching element UN is turned on (VP, WP, UN, VN, WN are turned off), and the currents Iau, Iav, Iaw generated by the speed electromotive force Es of the permanent magnet synchronous motor are detected by the shunt resistance current detectors SHix, SHiy, SHdz.

In the state where the speed electromotive force Es of the permanent magnet synchronous motor remains, when only the lower-arm side switching element UN is turned on (VP, WP, UN, VN, WN are turned off), the current surely flows, while, in the case where the speed electromotive force Es does not remain, the current does not flow. That is, when a voltage VSHix of the shunt resistance current detector SHix, or a voltage VSHdy of the SHdy, or a voltage VSHiz of the shunt resistance current detector SHiz can be detected, it is recognized that the synchronous motor is rotating, while, when the voltages cannot be detected, it is recognized that the synchronous motor is stopped.

Further, the same effect can be obtained when only lower-arm side switching element (for example, UN) is turned on and operated (UP, VP, WP, VN, WN are turned off), or when only two lower-arm side switching elements (for example, UN and VN) are turned on and operated (UP, VP, WP, and WN are turned off), or when only three lower-arm side switching elements (for example, UN, VN and WN) are turned on and operated (UP, VP, and WP are turned off).

FIG. 7(b) shows an example of a view of the time chart. After the power conversion device is stopped due to some failure (the elements UP, VP, WP, UN, VN, WN configuring the reverse converter 3 are all turned off), only the lower-arm side switching element UN is turned on in the time period of ts and a voltage corresponding to a current flowing through the shunt resistance current detector is detected. When the detected voltage exceeds a voltage corresponding to a current value set beforehand, the state where the synchronous motor is rotating is displayed on the display. Further, only the lower-arm side switching element UN is turned on for each of time intervals Td set beforehand, and the voltage corresponding to the current flowing through the shunt resistance current detector is repeatedly detected. Then, when the detected voltage value exceeds the voltage value corresponding to the current value set beforehand, that the synchronous motor is rotating is displayed on the display, and when the detected voltage value is not larger than the voltage value corresponding to the current value set beforehand, that the synchronous motor is stopped is displayed on the display.

Here, FIG. 7(b) shows an example in which the time interval Td set beforehand is not constant, and in which, according to the value of the detected voltage corresponding to the current flowing through the shunt resistance current detector, the repeated time interval is variably set as Td1, Td2, ···, Tdn.

At each time period Td variably set beforehand, the specific switching element is turned on and off in order that, for example, when the switching is performed in each time interval Td = 5 seconds, and when the value of detected current is smaller than the value of current previously detected, it is determined that the speed electromotive force becomes smaller, that is, the rotation speed becomes smaller, and hence, the switching is performed in the time period Td = 3 seconds so that whether the synchronous motor is rotating or stopped can be determined by detecting the current.

Of course, the time period Td set beforehand may be arbitrarily set by the operator using the digital operation panel 7.

EMBODIMENT 3

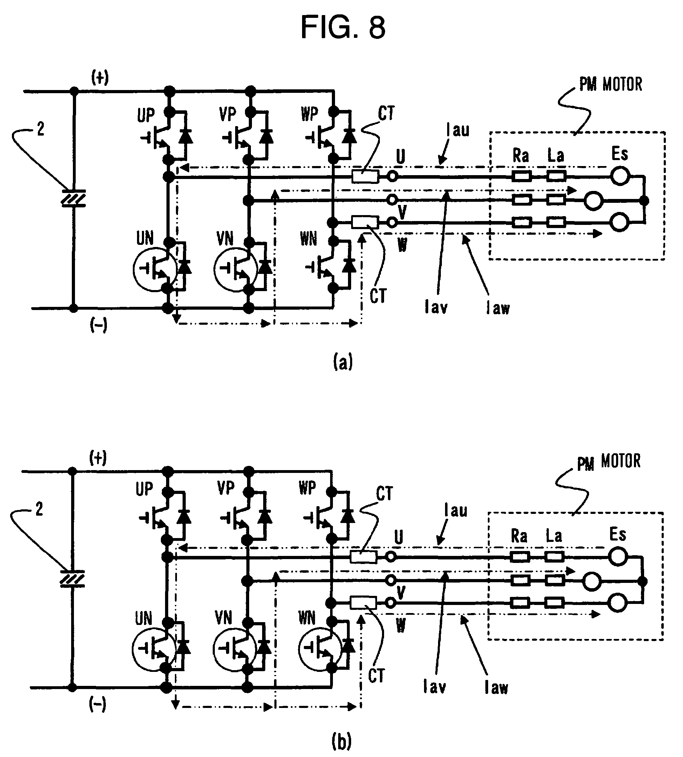

FIG. 8 shows a rotation state detection operation mode of the permanent magnet synchronous motor according to embodiment 3. Configurations and functions in embodiment 3, which are common to those in FIG. 6 and FIG. 7 in embodiment 1, are denoted by the same reference numerals and characters.

As shown in FIG. 8(a), the reverse converter 3 is configured by upper-arm side UP, VP, WP switching elements connected to the (+) potential side of the DC intermediate circuit, and lower-arm side UN, VN, WN switching elements connected to the (-) potential side of the DC intermediate circuit.

The circuit configuration of FIG. 8(a) of the embodiment shows routes of currents Iau, Iav and Iaw flowing through the switching elements and the permanent magnet synchronous motor, when only the lower-arm side switching elements UN and VN are turned on (Up, VP, WP, WN are turned off).

$$\text{The current Iav can be obtained as Iav} = - \text{(Iau + Iaw).}$$

As can be seen from FIG. 8(a), even when the VN and WN switching elements of V phase and W phase are turned on, currents do not flow through the switching elements of V phase and W phase but flow through the diodes respectively connected in parallel with the VN and WN switching elements of V phase and W phase, and hence, the same effect as that in FIG. 6 can be obtained.

The currents Iau and Iaw generated by the speed electromotive force Es of the permanent magnet synchronous motor are detected by the current detectors CT, and thereby, it is possible to confirm that, when currents flow, the synchronous motor is rotating, and that, when currents do not flow, the synchronous motor is stopped.

Further, FIG. 8(b) shows an example in which all the lower-arm side switching elements UN, VN, WN are turned on. However, as can be seen from FIG. 8(b), even when the VN and WN switching elements of V phase and W phase are turned on, currents do not flow through the switching elements of V phase and W phase, but flow through the diodes respectively connected in parallel with the VN and WN switching elements of V phase and W phase, and hence, the same effect as that in FIG. 6 can be obtained.

That is, even when only one lower-arm side switching element (for example, UN) is turned on (UP, VP, WP, VN, WN are turned off), or even when only two lower-arm side switching elements (for example, UN and VN) are turned on (UP, VP, WP, WN are turned off), or even when only three lower-arm side switching elements (for example, UN, VN and WN) are turned on (UP, VP, WP are turned off), the same effect can be obtained.

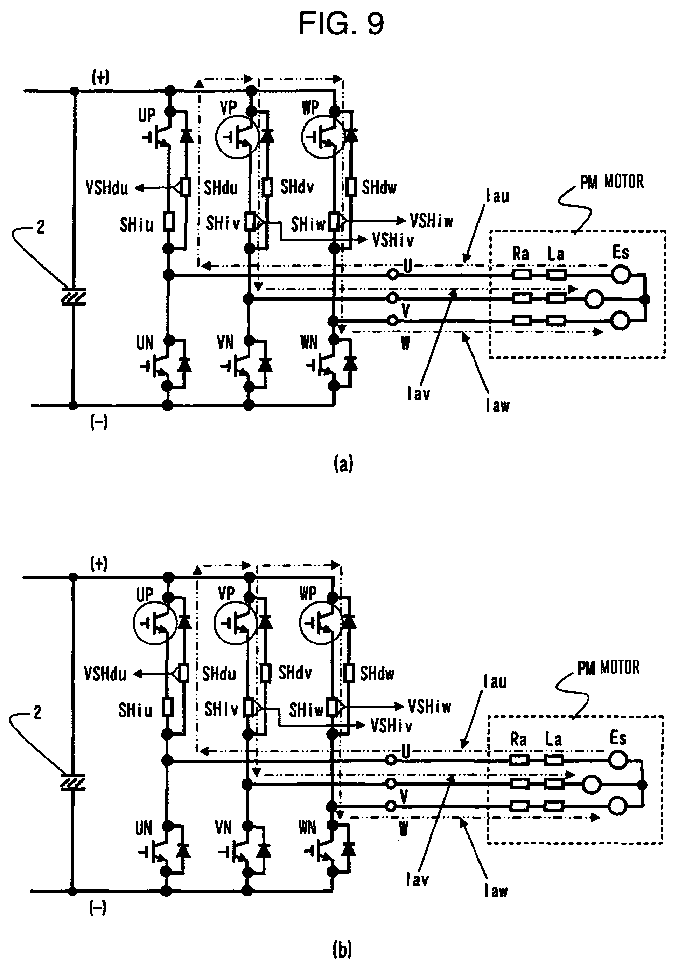

FIG. 9 shows another example of the rotation state detection operation mode of the permanent magnet synchronous motor according to the embodiment. As shown in FIG. 9(a), the reverse converter 3 is configured by UP, VP, WP upper-arm side switching elements connected to the (+) potential side of the DC intermediate circuit, UN, VN, WN lower-arm side switching elements connected to the (-) potential side of the DC intermediate circuit, shunt resistance current detectors SHix, SHiy, SHiz detecting currents of the lower-arm side UN, VN, WN switching elements, and shunt resistance current detectors SHdx, SHdy, SHdz detecting currents of diode elements respectively connected in parallel with the UN, VN, WN switching elements.

The circuit configuration of FIG. 9(b) of the embodiment shows routes of currents Iau and Iaw flowing through the switching elements and the permanent magnet synchronous motor, when only the upper-arm side switching elements VP and WP are turned on (UP, UN, VN, WN are turned off).

As can be seen from FIG. 9(b), even when the UP switching element of U phase is turned on, a current does not flow through the switching element of U phase, but flows through the diode connected in parallel with the UP switching element of U phase, and hence, the same effect as that in FIG. 7 can be obtained.

It is confirmed that, when the voltage VSHdu at the shunt resistance current detector SHdu, or the voltage VSHiv at the shunt resistance current detector SHiv, or the voltage VSHiw at the shunt resistance current detector SHiw is detected, the synchronous motor is rotating, and that, when the voltages are not detected, the synchronous motor is stopped.

Further, FIG. 9(b) is an example in which the upper-arm side switching elements UP, VP, WP are turned on. As can be seen from FIG. 9(b), even when the UP switching element of U phase is turned on, a current does not flow through the switching element of U phase, but flows through the diode connected in parallel with the UP switching element of U phase, and hence, the same effect as that in FIG. 7 can be obtained.

That is, even when only one upper-arm side switching element (for example, UP) is turned on (VP, WP, UN, VN, WN are turned off), or even when only two upper-arm side switching elements (for example, UP and VP) are turned on (WP, UN, VN, WN are turned off), or even when only three upper-arm side switching elements (for example, UP, VP, WP) are turned on (UN, VN, WN are turned off), the same effect can be obtained.

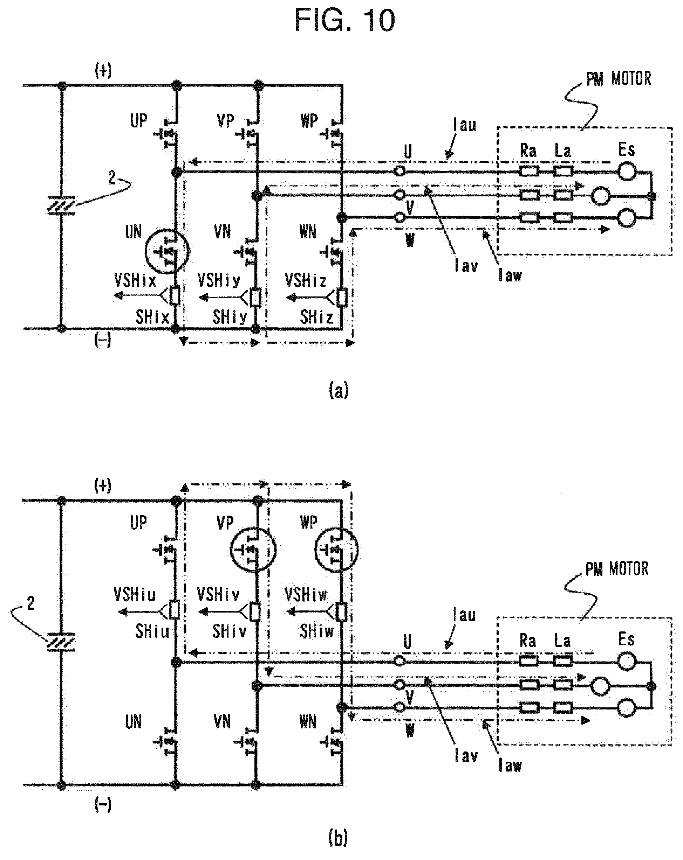

FIG. 10 shows another example of the rotation detection operation mode of the permanent magnet synchronous motor according to the embodiment. Configurations and functions in the configuration diagram of FIG. 10(a), which are common to those in FIG. 7(a), are denoted by the same reference numerals and characters. FIG. 10(a) is differs from FIG. 7(a) in that SiC-MOSFETs are used as the switching elements.

In a forward bias state in which a gate voltage is applied, the SiC-MOSFET enables a current to flow from the drain to the source (positive direction) or from the source to the drain (negative direction). That is, FIG. 10 shows an example in which the diodes connected in parallel with the SiC-MOSFETs are eliminated by utilizing the characteristics of SiC-MOSFET which allows a current to flow in the positive and negative directions.

For this reason, positive and negative currents flowing through the switching elements SiC-MOSFET can be detected only by the shunt resistance current detectors SHix, SHiy, SHiz for detecting currents of the switching elements (without SHdx, SHdy, SHdz). During the dead-time period, a current flows through a body diode (parasitic diode, not shown) but can be detected by the shunt resistance current detector. For this reason, also in the configuration of FIG. 10(a), the control similar to the control in FIG. 7(a) can be performed, and hence, the same effect as that in FIG. 7(b) can be obtained.

Further, configurations and functions in the configuration diagram of FIG. 10(b), which are common to those in FIG. 9(a), are denoted by the same reference numerals and characters. FIG. 10(b) is differs from FIG. 9(a) in that SiC-MOSFETs are used as the switching elements. The diodes connected in parallel with the SiC-MOSFETs are eliminated by utilizing the characteristics of SiC-MOSFET which allows a current to flow in the positive and negative directions.

For this reason, positive and negative currents flowing through the switching elements SiC-MOSFET can be detected only by the shunt resistance current detectors SHiu, SHiv, SHiw for detecting currents of the switching elements (without SHdu, SHdv, SHdw). Of course, during the dead-time period, a current flows through the body diode (parasitic diode, not shown) but can be detected by the shunt resistance current detector. For this reason, also in the configuration of FIG. 10(b), the control similar to the control in FIG. 9(a) can be performed, and hence, the same effect as that in FIG. 9(b) can be obtained.

EMBODIMENT 4

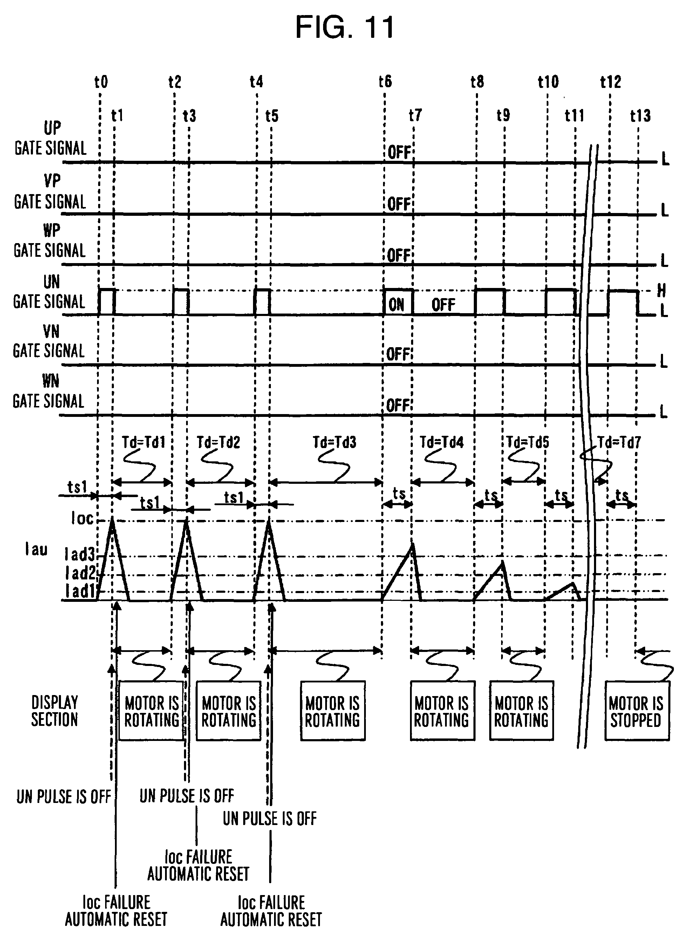

FIG. 11 shows another example of a view showing a rotation state detection time chart of the permanent magnet synchronous motor according to embodiment 4. Similarly to that of FIG. 6, in the example in FIG. 11, only the lower-arm side switching element UN is turned on in time period ts, and the current flowing through the switching element is detected by the current detector CT, and then, when the value of the detected current exceeds a current value set beforehand, that the synchronous motor is rotating is displayed on the display device. After the power conversion device is stopped due to some failure (the elements UP, VP, WP UN, VN, WN configuring the reverse converter 3 are all turned off), only the lower-arm side switching element UN is turned on. However, when the rotation speed of the synchronous motor is large, a large current flows, and thereby, the current detected by the current detector reaches an overcurrent level Ioc (a current level set beforehand to protect the switching elements configuring the reverse converter), so that a power conversion device is tripped due to the overcurrent. For this reason, usually, only the switching element UN is turned on in the time period ts. However, after the time period ts1, the value of the detection current reaches the overcurrent level Ioc, and at this time, the power conversion device is stopped (UN pulse is turned off). Thereafter, the trip due to the failure is automatic reset, but this reset may be performed until whether or not the synchronous motor is rotating is displayed. Of course, when the failure is not latched, the failure need not be reset.

Embodiment 4 shows an example in which, since the rotation speed of the synchronous motor is large, the overcurrent trip is generated three times. Although the lower-arm side switching element UN is turned on at time t0, the rotation speed of the synchronous motor is large, and hence a large current flows. Thereby, the detection current reaches the overcurrent level Ioc, and the power conversion device is stopped (UN pulse is turned off) in time period ts = ts1 (at time t1), so that the power conversion device is tripped due to the overcurrent. The trip operated and latched by the overcurrent. Ioc is automatically reset.

Further, until next time t2 (elapsed time Td = Td1 from time t1), "motor is rotating" is displayed. At time t2, only the lower-arm side switching element UN is again turned on. However, the rotation speed of the synchronous motor is still large, and a large current flows, so that the detection current again reaches the overcurrent level Ioc. In time period ts = ts1 (at time t3), the power conversion device is stopped (UN pulse is turned off), so that the power conversion device is tripped due to the overcurrent. The trip operated and latched by the overcurrent Ioc is automatically reset.

Next, until time t4 (elapsed time Td = Td2 from the time t3), "motor is rotating" is displayed. At time t4, only the lower-arm side switching element UN is again turned on. However, the rotation speed of the synchronous motor is still large, and a large current flows, so that the detection current again reaches the overcurrent level Ioc. In time period ts = ts1 (at time t5), the power conversion device is stopped (UN pulse is turned off), so that the power conversion device is tripped due to the overcurrent. The trip operated and latched by the overcurrent Ioc is automatically reset.

Of course, in the case where the "inertial rotation detection mode" of the synchronous motor is selected beforehand in the digital operation panel 7, when an overcurrent trip occurs, the overcurrent trip is automatically reset, so that only the lower-arm side switching element UN can be again turned on. When the overcurrent trip is continued, the automatic reset is performed. Of course, the automatic reset need not be performed in the configuration in which, in the state where the "inertial rotation detection mode" of the synchronous motor is selected, even when the detection current reaches the overcurrent level, the overcurrent trip is not latched. As long as, when the detected current reaches the overcurrent level Ioc, the power conversion device is once stopped (UN pulse is turned off), and then, only the lower-arm side switching element UN is again turned on, so that the detection current reaches the overcurrent level Ioc, and only the lower-arm side switching element UN is repeatedly turned on.

Further, at the next time t6 (elapsed time Td = Td3 from time t5), "motor is rotating" is displayed. At time t6, only the lower-arm side switching element UN is again turned on, but the rotation speed of the synchronous motor is small. As a result, the detected current is in the range between Ioc and Iad3 set beforehand, and hence, after time period ts (at time t7), the power conversion device is stopped (UN pulse is turned off).

In embodiment 4, the overcurrent level Ioc (a current level set beforehand to protect the switching elements configuring the reverse converter: latch) is used as a determination criteria, but the determination criteria is not limited to this level value. Even when a first current setting level Iad0 which is lower than the overcurrent level Ioc and which is set beforehand and dedicated to the "inertial rotation detection mode" is used as the determination criteria, the intention of the embodiment is not changed. In this case, when the detected current reaches the first current setting level Iad0, the power conversion device is once stopped (UN pulse is turned off), and only the lower-arm side switching element UN is again turns on. As long as the detected current reaches the current value Iad0, the lower-arm side switching element UN is repeatedly turned on.

Here, among time periods of from Td1 to Td3, the relationship: Td1 < Td2 < Td3 is set beforehand. That is, that the detected current reaches the overcurrent level Ioc means that the number of inertial rotations of the synchronous motor is large. Therefore, in order to avoid this overcurrent level, it is desired that the next timing when only the lower-arm side switching element UN is turned is set longer than the preceding timing. When the time interval is set longer, the time period in which the synchronous motor inertially rotates is increased, so that the rotation speed of the synchronous motor is also reduced. For this reason, the time period Td is subsequently set in such a manner that Td2 is longer than Td1, and further Td3 is longer than Td2.

Here, in the case where, at time t6, only the lower-arm side switching element UN is again turned on, where, at time t7, the detected current falls in the region between Ioc and Iad3 set beforehand, it is determined that the rotation speed of the synchronous motor is reduced, and hence, the time period from time t7 to time t8 (elapsed time Td = Td4 from time t7) is set shorter than Td3, but may be set shorter than Td2.

Further, at time t8 (elapsed time Td = Td4 from time t7), "motor is rotating" is displayed, and only the lower-arm side switching element UN is again turned on at time t8. When the rotation speed of the synchronous motor is reduced, and when the detected current falls in the range between Iad2 and Iad3 set beforehand, the power conversion device is stopped (UN pulse is turned off) after ts (at time t9).

At time t10 (elapsed time Td = Td5 from time t9), "motor is rotating" is displayed, and only the lower-arm side switching element UN is again turned on at time t10. When the rotation speed of the synchronous motor is further reduced, and when the detected current falls in the region between Iad1 and Iad2 set beforehand, the power conversion device is stopped (UN pulse is turned off) after ts (at time t11).

The above operation is repeated, and at time t12 (elapsed time Td = Td7), the lower-arm side switching element UN is again turned on. At time t13 when the detected current is not larger than Iad1 and is almost equal to 0, "motor is stopped" is displayed at time t13 or later.

Further, it may be configured such that, until the operation signal is inputted into the power conversion device, only the lower-arm side switching element UN is continuously turned on, and the presence or absence of rotation of the synchronous motor is continuously detected. Of course, when it is determined that the synchronous motor is stopped, the control, in which the lower-arm side switching element UN is continuously turned on, may be stopped at time t13 or later.

Here, among time periods of from Td4 to Tdn, the relationship: Td4 > Td5 > Td6 > Td7 is set beforehand. That is, three levels of Iad1, Iad2 and Iad3 of current values are set beforehand, and the relationship between each of the levels and the repetition time interval Td set beforehand is determined as follows.

- When $Iad3 \leq Iau < Ioc$, Td = Td4
- When $Iad2 \leq Iau < Iad3$, Td = Td5
- When $Iad1 \leq Iau < Iad2$, Td = Td6
- When $Iau < Iad1$, Td = Td7

This shows that, as can be seen from expression (4), that the value of current (detected current value) flowing through the synchronous motor is reduced means that the speed electromotive force is reduced, that is, the rotation speed is reduced.

For this reason, that the detected current value is reduced means that the rotation speed of the synchronous motor is reduced, and hence the time period until the synchronous motor is stopped is reduced. Therefore, when the current is detected such that next subsequent time period Td is shorter than the previous time period, the time period required to grasp the state where the synchronous motor is stopped can be reduced.

In this way, the relationships are determined beforehand, and the repetition time period Td is automatically changed according to the current value detected by the current detector. Therefore, there is an advantage that the operator does not need to repeatedly set the time period Td.

In embodiment 4, three levels Iad1, Iad2, Iad3 of the current values are set beforehand, and the relationship between each of the levels and the repetition time period Td set beforehand is determined. However, the number of current value setting levels set beforehand is not limited in particular and is not limited to three, and n current value setting levels (Iad1, ·····, Iadn) may be set to automatically change the repetition time period Td according to the current value setting levels.

EMBODIMENT 5

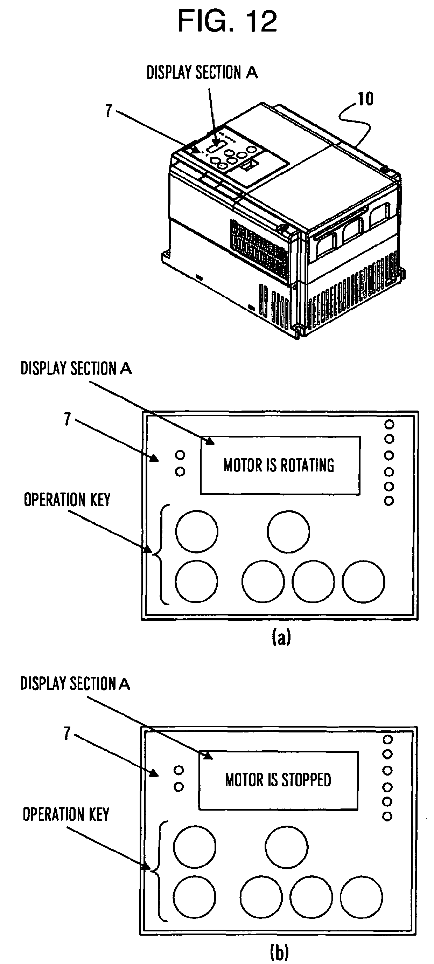

FIG. 12 shows a display example of a digital operation panel according to the embodiment 4. The presence or absence of the rotational state of the permanent magnet synchronous motor is displayed on the display section A of the digital operation panel 7 mounted on the surface of the power conversion device 10. FIG. 12(a) shows an example in which, when it is detected that the permanent magnet synchronous motor is rotating, "motor is rotating" is displayed on the display section A. FIG. 12(b) shows an example in which, when it is detected that the permanent magnet synchronous motor is stopped, "motor is stopped" is displayed on the display section A.

Further, the display contents are not limited to "motor is rotating" and "motor is stopped", and an actual "rotation speed" (for example, such as, "1000 (r/m)", "0 (r/m)", or "1000", "0") may also be displayed. Alternatively, "voltage generated", "no voltage generated", or "voltage danger" may also be displayed. That is, it is only necessary that "motor is rotating" or "motor is stopped" is recognized by the operator, and hence the display contents are not limited. Of course, the display contents may also be displayed in the host device 12.

As described in the above embodiments, after, for example, a failure occurs in the power conversion device and thereby the output of the power conversion device is interrupted, the presence or absence of the speed electromotive force corresponding to the rotation speed of the permanent magnet synchronous motor, or the presence or absence of the current flowing through the synchronous motor is detected, and then, whether the synchronous motor is rotating or stopped is displayed on the display. Therefore, the user can perform visual recognition and pay attention, to thereby eliminate the risk of carelessly touching the output terminal of the power converter device.

Further, in the application of the power conversion device to, for example, a ventilation fan, or the like, there is a case where, even when the synchronous motor is normally stopped by the power conversion device, and when the fan also once stopped, the fan is again rotated by air of outside air, and thereby the synchronous motor is inertially rotated. Also in such application, the presence or absence of rotation of the synchronous motor can be displayed on the display device, or the alarm output signal Sig1 can be used to turn on the alarm lamp for calling attention of the user.

REFERENCE SIGNS LIST

| | |
|---|---|
| 1 | Forward converter |
| 2 | Smoothing capacitor |
| 3 | Reverse converter |
| 4 | Control calculation device |
| 5 | Control circuit |
| 6 | Cooling fan |
| 7 | Digital operation panel |
| 8 | Drive circuit |
| 9 | Voltage detection circuit |
| 10 | Power conversion device |
| 11 | Load device |
| 12 | Host device |
| 13 | Switching regulator circuit |
| 14 | Voltage detection circuit |
| CT | Current detector |

| SH1, SHi, SHd | Shunt resistance current detector |
| PM motor | Permanent magnet synchronous motor |
| NFB | No-fuse breaker |
| MC | Electromagnetic contactor |
| Ioc | Overcurrent level |
| Iad1, Iad2, Iad3 | Current value setting level defined beforehand |

**Claims**

1. A power conversion device for a permanent magnet synchronous motor drive, comprising:

   a forward converter which converts an AC voltage of an AC power supply into a DC voltage by rectifying the AC voltage;
   a DC intermediate circuit which has a smoothing capacitor smoothing the DC voltage converted in the forward converter;
   a reverse converter which has upper-arm side semiconductor elements connected to the (+) potential side of the DC intermediate circuit, and lower-arm side semiconductor elements connected to the (-) potential side of the DC intermediate circuit, and converts the DC voltage rectified by the DC intermediate circuit into an AC voltage; and
   a current detector which detects a current flowing through the reverse converter,
   the power conversion device variably controlling a speed of a permanent magnet synchronous motor and comprising a control circuit which is configured, after the output of electric power from the power conversion device to the permanent magnet synchronous motor is interrupted, to control the upper-arm side semiconductor elements and the lower-arm side semiconductor elements to turn on one or more of semiconductor elements on one arm side of the upper-arm side or the lower-arm side, and to turn off all of the semiconductor elements on the other arm side, and configured, when a predetermined current is detected by the current detector, to output a signal indicating that the permanent magnet synchronous motor is rotating.

2. The power conversion device according to claim 1, wherein
   the semiconductor elements on the one arm side are turned on in a time period Td set beforehand.

3. The power conversion device according to claim 1, wherein
   the current detector detects a current outputted from the power conversion device, or a current of the upper-arm side or lower-arm side semiconductor elements of the power conversion device.

4. The power conversion device according to claim 2, wherein
   the time period Td set beforehand can be changed according to a current detected in the current detector.

5. The power conversion device according to claim 1, wherein
   the control circuit performs control, when a current detected by the current detector exceeds a predetermined value, to emit, to a display, a signal indication that the permanent magnet synchronous motor is rotating, and to display the signal on the display, and performs control, when a current detected by the current detector is not larger than the predetermined value, to emit, to the display, a signal indication that the permanent magnet synchronous motor is stopped, and to display the signal on the display.

6. The power conversion device according to claim 1, wherein
   when a current detected by the current detector reaches an overcurrent level to trip the power conversion device, the control circuit automatically releases the trip state.

7. The power conversion device according to claim 4, wherein
   when a current detected by the current detector reaches an overcurrent level to trip the power conversion device, the control circuit performs control so that the next time interval Td is longer than the previous time period Td.

8. The power conversion device according to claim 1, wherein
   when a current detected by the current detector is smaller than a predetermined value, the control circuit stops controlling the upper-arm side semiconductor elements and the lower-arm side semiconductor elements to turn on one or more of semiconductor elements of the upper-arm side or the lower-arm side, and to turn off all of the other semiconductor elements of the upper-arm side and the lower-arm side.

9. A power conversion device comprising:

a forward converter converting an AC voltage of an AC power supply into a DC voltage by rectifying the AC voltage;
a DC intermediate circuit having a smoothing capacitor smoothing the DC voltage converted in the forward converter;
a reverse converter configured by semiconductor elements and converting the DC voltage rectified by the DC intermediate circuit into an AC voltage; and
a voltage detection circuit detecting a voltage between the output terminals of the power conversion device,
the power conversion device variably controlling a speed of a permanent magnet synchronous motor and comprising a control circuit configured to, when a predetermined voltage is detected by the voltage detection circuit after the output of electric power of the power conversion device is interrupted, output a signal indicating that the permanent magnet synchronous motor is rotating.

10. The power conversion device according to claim 9, wherein
the control circuit performs control, when a voltage detected by the voltage detection circuit exceeds a value set beforehand, to emit, to a display, a signal indication that the permanent magnet synchronous motor is rotating, and to display the signal on the display, and performs control, when a voltage detected by the voltage detection circuit is not larger than the value set beforehand, to emit, to the display, a signal indication that the permanent magnet synchronous motor is stopped, and to display the signal on the display.

11. The power conversion device according to claim 9, wherein
the voltage detected by the voltage detection circuit is converted into a pulse voltage; and when the pulses are counted and the number of counted pulses exceeds a value set beforehand, a signal indicating that the permanent magnet synchronous motor is rotating is outputted.

12. The power conversion device according to claim 11, wherein
when the pulses are counted and the number of counted pulses is not larger than the value set beforehand, a signal indicating that the permanent magnet synchronous motor is stopped is outputted.

13. The power conversion device according to claim 1 or 9, comprising:

an operation panel for setting an operating condition of the power conversion device,
wherein, when determining that the permanent magnet synchronous motor is rotating or stopped, the control circuit displays, on the operation panel, that the permanent magnet synchronous motor is rotating or stopped.

14. The power conversion device according to one of claim 1 or 9, comprising:

a host device for setting an operating condition of the power conversion device,
wherein, when determining that the permanent magnet synchronous motor is rotating or stopped, the control circuit displays, in the host device, that the permanent magnet synchronous motor is rotating or stopped.

# FIG. 1

# FIG. 2

# FIG. 3

# FIG. 4

(a)

(b)

# FIG. 5

(a)

$$V1(t) = M(-1/\tau + j\omega r) * I20 * e^{(-t/\tau)} * e^{(j\omega rt)}$$

1/fr

to : TIME WHEN POWER SUPPLY IS INTERRUPTED

(b)

$$Es = ke * \Phi m * fr$$

(c)

$$Va = Es = ke * \Phi m * \omega r \propto fr$$

1/fr

to : TIME WHEN POWER SUPPLY IS INTERRUPTED

(d)

# FIG. 6

(a)

(b)

# FIG. 7

(a)

(b)

# FIG. 8

(a)

(b)

# FIG. 9

(a)

(b)

# FIG. 10

(a)

(b)

# FIG. 11

# FIG. 12

DISPLAY SECTION A

7

10

DISPLAY SECTION A

7

MOTOR IS ROTATING

OPERATION KEY

(a)

DISPLAY SECTION A

7

MOTOR IS STOPPED

OPERATION KEY

(b)

# INTERNATIONAL SEARCH REPORT

| International application No. |
|---|
| PCT/JP2014/050884 |

A. CLASSIFICATION OF SUBJECT MATTER
*H02P29/00*(2006.01)i, *H02P27/06*(2006.01)i

According to International Patent Classification (IPC) or to both national classification and IPC

B. FIELDS SEARCHED

Minimum documentation searched (classification system followed by classification symbols)
H02P29/00, H02P27/06

Documentation searched other than minimum documentation to the extent that such documents are included in the fields searched
Jitsuyo Shinan Koho        1922–1996   Jitsuyo Shinan Toroku Koho   1996–2014
Kokai Jitsuyo Shinan Koho  1971–2014   Toroku Jitsuyo Shinan Koho   1994–2014

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | WO 2012/032571 A1 (Hitachi Industrial Equipment System Co., Ltd.), 15 March 2012 (15.03.2012), claims; paragraphs [0023] to [0024], [0051] to [0062]; fig. 14 to 18 & EP 2615734 A1        & CN 103053109 A | 1-3,5-6,8-14<br>4,7 |
| Y<br>A | JP 2009-106092 A (Omron Corp.), 14 May 2009 (14.05.2009), claims; paragraphs [0057] to [0103] (Family: none) | 1-3,5-6,8-14<br>4,7 |
| Y<br>A | JP 2002-34284 A (Seiko Epson Corp.), 31 January 2002 (31.01.2002), entire text; all drawings (Family: none) | 1-3,5-6,8-14<br>4,7 |

| ☒ Further documents are listed in the continuation of Box C. | ☐ See patent family annex. |
|---|---|

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 23 April, 2014 (23.04.14) | 13 May, 2014 (13.05.14) |

| Name and mailing address of the ISA/<br>Japanese Patent Office | Authorized officer |
|---|---|
| Facsimile No. | Telephone No. |

Form PCT/ISA/210 (second sheet) (July 2009)

**INTERNATIONAL SEARCH REPORT**

International application No.

PCT/JP2014/050884

C (Continuation). DOCUMENTS CONSIDERED TO BE RELEVANT

| Category* | Citation of document, with indication, where appropriate, of the relevant passages | Relevant to claim No. |
|---|---|---|
| Y<br>A | JP 2005-41171 A (NEC Engineering, Ltd.),<br>17 February 2005 (17.02.2005),<br>paragraphs [0028] to [0029]<br>(Family: none) | 1-3,5-6,8-14<br>4,7 |
| A | JP 2009-19561 A (IHI Corp.),<br>29 January 2009 (29.01.2009),<br>entire text; all drawings<br>(Family: none) | 1-14 |
| A | JP 8-331894 A (Sanken Electric Co., Ltd.),<br>13 December 1996 (13.12.1996),<br>paragraphs [0018] to [0019]; all drawings<br>(Family: none) | 1-14 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010154661 A